# EUROPEAN PATENT SPECIFICATION

(11) **EP 0 490 292 B1**
(45) Date of publication and mention of the grant of the patent: **01.04.1998**
(21) Application number: 91120976.5
(22) Date of filing: 06.12.1991
(51) Int. Cl.: G01S 7/48, G02B 6/04, G02B 6/06, G02B 6/42

(54) **Light irradiating apparatus having light emitting diode used as light source**
Lichtbestrahlungsgerät mit lichtemittierender Diode als Lichtquelle
Appareil d'irradiation à lumière avec une diode électroluminescente en tant que source de lumière

(30) Priority: 07.12.1990 JP 401774/90 U; 17.12.1990 JP 403505/90 U; 17.12.1990 JP 403506/90 U; 21.12.1990 JP 404101/90 U; 22.12.1990 JP 404364/90 U
(43) Date of publication of application: 17.06.1992
(60) Divisional application: 94100997.9
(73) Proprietor: Stanley Electric Co., Ltd., Meguro-ku Tokyo 153 (JP)
(72) Inventor: Ohmamyuda, Yukio, Sagamihara-shi, Kanagawa-ken (JP); Kimura, Shigeru, Yokohama-shi, Kanagawa-ken (JP); Tanabe, Toru, Machida-shi, Tokyo (JP); Iwasaki, Kazuhisa, Yokohama-shi, Kanagawa-ken (JP); Seto, Takao Yutakahaitsu Nakayama 101, Kanagawa-ken (JP); Kitamura, Hideki, Yokohama-shi, Kanagawa-ken (JP); Sugimura, Kazuhiko, Yokohama-shi, Kanagawa-ken (JP); Senoo, Yasushi, Yokohama-shi, Kanagawa-ken (JP)
(74) Representative: Dr. Elisabeth Jung Dr. Jürgen Schirdewahn Dipl.-Ing. Claus Gernhardt

(56) References cited:
- DE-C- 1 162 787
- US-A- 4 914 747
- PATENT ABSTRACTS OF JAPAN vol. 008, no. 259 (P-317) 28 November 1984 & JP-A-59 131 108 ( TOSHIBA ) 27 July 1984
- PATENT ABSTRACTS OF JAPAN vol. 014, no. 484 (P-1120)22 October 1990 & JP-A-21 96 983 ( NEC CORP ) 3 August 1990
- PATENT ABSTRACTS OF JAPAN vol. 014, no. 469 (M-1034)13 January 1989 13 January 1989 & JP-A-21 87 294 ( NEC CORP ) 23 July 1990
- PATENT ABSTRACTS OF JAPAN vol. 012, no. 383 (P-770)13 October 1988 13 October 1988 & JP-A-63 128 232 ( MINOLTA CAMERA CO) 31 May 1988
- APPLIED OPTICS vol. 22, no. 7, 1 April 1983, NEW YORK US pages 960 - 961 LADANY ET AL 'WEDGE COUPLING OF LASERS INTOMULTIMODE FIBERS'

## Description

The present invention relates to a light irradiating apparatus for an optical radar system.

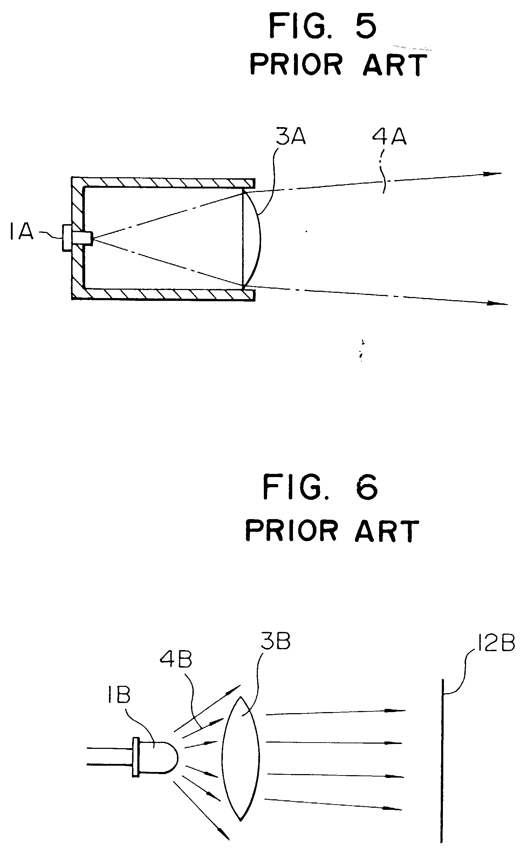

To facilitate understanding of the present invention, a conventional optical radar system as well as a conventional light irradiating apparatus having a light emitting diode used therefor as a light source will briefly be described below with reference to Figs. 5 and 6.

Fig. 5 is a schematic side view of a conventional optical radar system which has been developed as an apparatus for measuring a distance from a motorcar running ahead of a rear motorcar. In the drawing, reference numeral 1A designates a light source, reference numeral 3A designates a light irradiating lens and reference numeral 4A designates an emitted light.

Usually, the light source 1A having a certain small surface is arranged at the position coincident with the focus of the light irradiating lens 3A. Thus, the light outputted from the light source 1A becomes an emitted light 4A which propagates while gradually radially expanding after it has permeated through the light irradiating lens 3A. When the motorcar running ahead,of the rear motorcar is located remote from the rear motorcar, the emitted light 4A sufficiently radially expands during its propagation, whereby a reflective plate mounted on the rear part of the motorcar running ahead of the rear motorcar is reliably illuminated with the emitted light 4A. With the conventional optical radar system constructed in the above-described manner, the motorcar running ahead of the rear motorcar can visually be recognized by a driver on the rear motorcar, and moreover, a distance between both the motorcars can be measured with excellent accuracy by measuring the time that elapses from the point of time when the light is reflected at the reflective plate till the point of time when the reflected light returns to the rear motorcar, by using suitable measuring means mounted on the rear motorcar.

However, when the distance between both the motorcars is short, the emitted light 4A hardly expands in the radial direction. For this reason, there arises an occasion that the reflective plate on the motorcar running ahead of the rear motorcar is not illuminated with the emitted light 4A depending on the positional relationship between both the motorcars. It is obvious that the motorcar running ahead of the rear motorcar fails to be visually recognized by the driver on the rear motorcar and the distance between both the motorcars can not be measured by any means.

Fig. 6 is a schematic side view of a conventional light emitting apparatus having a light emitting diode used therefor as a light source (hereinafter referred to simply as a LED light emitting apparatus) for projecting a substantially parallel light onto a screen or the like while a light emitting diode is used as a light source. In the drawing, reference numeral 1B designates a light emitting diode light source (hereinafter referred to simply as a LED light source), reference numeral 3B designates a light irradiating lens, reference numeral 4B designates an emitted light and reference numeral 5B designates a screen.

With respect to the LED light source 1B for emitting a light from the whole surface thereof, a difference in optical intensity of the emitted light 4A arises depending on the positions where wire bonding portions and tip end portions are arranged. For this reason, even when the emitted light beam 4B outputted from the LED light source 1B is transformed into a substantially parallel light via the light irradiating lens 3B, the light 4B having fluctuation in optical intensity thereof is projected onto the screen 12B or the like while it is adversely affected by a pattern of emission of the light 4B from the LED light source 1B. In addition, since the LED light source 1B has a large light emission angle, an optical system associated with the light irradiating lens 3B becomes unavoidably complicated in structure when the emitted light 4B is intended to be transformed into a substantially parallel light at a high optical efficiency.

By the present invention there is provided a light irradiating apparatus for an optical radar system comprising a plurality of light emitting units so as to emit a narrow beam by activating part of said light emitting units or a wide beam by activating all said light emitting units. A light irradiating apparatus for an optical radar system according to the present invention is defined by claim 1.

When using an apparatus according to the present invention, a motor car running ahead of a rear motor car can be irradiated by the narrow beam or the wide beam according to the driver's choice. An example for the choice is that first the motor car running ahead is irradiated by the wide beam so as to detect a portion to be needed, and second said portion of the motor car running ahead is concentrically irradiated by the narrow beam.

US-Patent 4 914 747 shows a vehicular projector-type headlamp having upper and lower reflector parts and two light sources disposed one behind the other on a common axis, one of said light sources being positioned at the first focus of the upper reflector part, and the other light source being positioned at the first focus of the lower reflector part.

DE-C-1 162 787 shows in Fig. 10 a head lamp particularly for motorcars comprising a plurality of light producing units which can be activated individually or in common and which are disposed in a circular pattern in the center of which a blinker lamp is provided.

Other objects, features and advantages of the present invention will become readily apparent from reading of the following description which has been made in conjunction with the accompanying drawings.

The present invention is illustrated in the following drawings in which:
Fig. 1 is a perspective view of a light source in accordance with an embodiment of the present invention;
Fig. 2 is a sectional side view of an optical radar system wherein the light source shown in Fig. 1 is employed for the optical radar system;
Fig. 3 schematically illustrates an advantageous effect derived from the light source shown in Fig. 1;
Fig. 4 schematically illustrates another advantageous effect derived from the light source shown in Fig. 1;
Fig. 5 is a schematic side view of a conventional optical radar system for a measuring a distance between both motorcars running one after another;
Fig. 6 is a schematic side view of a conventional LED light irradiating apparatus using a light emitting diode as a light source; and

Now, the present invention will be described in detail hereinafter with reference to the accompanying drawings which illustrate a preferred embodiments of the present invention.

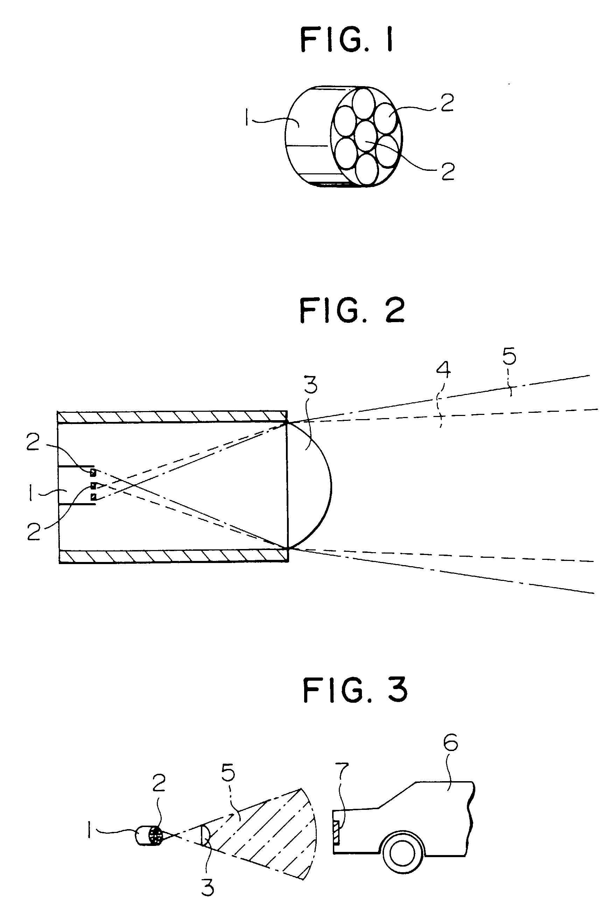

Fig. 1 is a perspective view of a light source employable for an optical radar system in accordance with an embodiment of the present invention. As shown in the drawings, the light source designated by reference numeral 1 is constituted by seven light emitting units 2 in such a manner that one of them is located at the central part of the light source 1 and the remaining six light emitting units 2 are circumferentially arranged around the central light emitting unit 2 in the side-by-side relationship. With the light source 1 constructed as described above, only the central light emitting unit 2 may be activated. Alternatively, all the seven light emitting units 2 may be activated simultaneously. It should be noted that infrared ray emitting diodes or the like are employed for the light emitting units 2.

With respect to an optical radar system as shown in Fig. 2, the light source 1 is located at the position coincident to the focus of a light irradiating lens 3, and an emitted light 4 generated when only the central light emitting unit 2 is activated becomes a narrow beam which advances from the light source 1 while gradually radially expanding after it has permeated through the light irradiating lens 3 in the same manner as the conventional LED light source 1A which has been described above with reference to Fig. 6. On the other hand, an emitted light 5 generated when all the seven light emitting units 2 are simultaneously activated becomes a wide beam which advances from the light source 1 while largely radially expanding after it has permeated through the light irradiating lens 3, because the light emitting section has a wide working surface and a some light component is irradiated from the position comparatively largely offset from an optical axis of the light source 1.

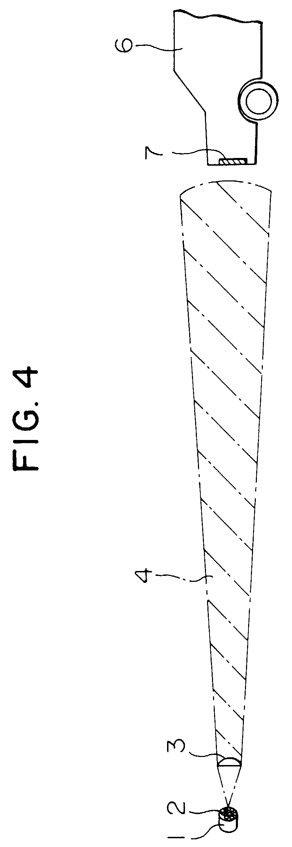

In a case where a distance between two motorcars, i.e., a rear motorcar (not shown) including the light source 1 and a motorcar 6 running ahead of the rear motorcar 6 is short, e.g., 10 meters, as shown in Fig. 3, a largely radially expanding wide light 5 is emitted from the light source 1 by activating all the seven light emitting units 2 so that a wide range inclusive of a reflective plate 7 mounted the rear end of the motorcar 6 is illuminated with the wide beam. On the contrary, in a case where a distance between the two motorcars is sufficiently long as shown in Fig. 4, only the central light emitting unit 2 is activated to generate a slightly radially expanding narrow beam 4. In this case, since the narrow beam 4 has sufficiently large radial expansion until it reaches the motorcar 6 running ahead of the rear motorcar, the reflective plate 7 on the rear end of the motorcar 6 can reliably be illuminated even with the narrow beam 4.

As is apparent from the above description, when the light source 1 of the present invention is employed for an optical radar system, the motorcar 6 running ahead of the rear motorcar can reliably visually be sensed by a driver on the rear motorcar regardless of a distance between the two motorcars by properly changing the working surface of the light emitting section of the light source 1 depending on the distance between the two motorcars. In addition, if the time that elapses from the point of time when the light beam is reflected from the reflective plate 7 on the rear end of the motorcar 6 till the point of time when the reflected light returns to suitable measuring means on the rear motorcar can be measured by this measuring means, the distance between the two motorcars can be determined with high accuracy.

It should be noted that the present invention should not be limited only to the described embodiment but the number of light emitting units 2 and a manner of arranging them may be determined in proper consideration of various working conditions. In addition to the case where the light source of the present invention is employed for an optical radar system as mentioned above, it may be used not only as a light source for a conventional light irradiating device or apparatus but also as a light source for a conventional lamp.

## Claims

1. A light irradiating apparatus for an optical radar system, said apparatus comprising a light source (1) and a lens (3), said light source (1) being located at a position coincident with the focus of said lens (3), and the light emitted from said light source (1) passing through said lens (3) for irradiating an object, said light source (1) comprising a plurality of light emitting units (2) arranged in such a manner that said light source (1) can emit a narrow beam or a wide beam by activating a part of said light emiting units (2) or all of said light emitting units (2), characterised in that said part of said light emitting units (2) for emitting a narrow beam comprises a single centrally positioned light emitting unit (2), the remaining light emitting units (2) of said plurality of light emitting units (2) being disposed symmetrically around said central light emitting unit.

2. A light irradiating apparatus according to claim 1, wherein said light emitting units (2) are arranged substantially perpendicular to the optical axis of said light irradiating apparatus.

3. A light irradiating apparatus according to claim 1 or 2, wherein said light source (1) comprises seven light emitting units (2).

4. A light irradiating apparatus according to one of claims 1 to 3, wherein said light source (1) is arranged in a manner that its illuminating surface is facing said lens (3).

5. A light irradiating apparatus according to claim 4, wherein said illuminating surface of said light source (1) is arranged substantially parallel to said lens (3).

## Patentansprüche

1. Lichtabstrahlungsvorrichtung für ein optisches Radarsystem, wobei die Vorrichtung eine Lichtquelle (1) und eine Linse (3) aufweist, die Lichtquelle (1) an einer Position angeordnet ist, die mit dem Brennpunkt der Linse (3) übereinstimmt, und das von der Lichtquelle (1) ausgesendete Licht durch die Linse (3) hindurchtritt, um ein Objekt anzustrahlen, die Lichtquelle (1) eine Mehrzahl von lichtaussendenden Einheiten (2) aufweist, die in einer solchen Weise angeordnet sind, daß die Lichtquelle (1) einen schmalen Strahl oder einen breiten Strahl aussenden kann durch Aktivieren eines Teils der lichtaussendenden Einheiten (2) oder aller lichtaussendenden Einheiten (2), dadurch gekennzeichnet, daß der genannte Teil der lichtaussendenden Einheiten (2) zum Aussenden eines schmalen Strahls eine einzige mittig angeordnete lichtaussendende Einheit (2) aufweist, und die verbleibenden lichtaussendenden Einheiten (2) der genannten Mehrzahl von lichtaussendenden Einheiten (2) symmetrisch rund um die mittlere lichtaussendende Einheit angeordnet sind.

2. Lichtabstrahlungsvorrichtung nach Anspruch 1, in welcher die lichtaussendenden Einheiten (2) im wesentlichen rechtwinklig zu der optischen Achse der Lichtabstrahlungsvorrichtung angeordnet sind.

3. Lichtabstrahlungsvorrichtung nach Anspruch 1 oder 2, in welcher die Lichtquelle (1) sieben lichtaussendende Einheiten (2) aufweist.

4. Lichtabstrahlungsvorrichtung nach einem der Ansprüche 1 bis 3, in welcher die Lichtquelle (1) in einer Weise angeordnet ist, daß ihre Beleuchtungsfläche der Linse (3) zugewandt ist.

5. Lichtabstrahlungsvorrichtung nach Anspruch 4, in welcher die Beleuchtungsfläche oder Leuchtfläche der Lichtquelle (1) im wesentlichen parallel zu der Linse (3) angeordnet ist.

## Revendications

1. Appareil d'irradiation de lumière pour un système de radar optique, ledit appareil comprenant une source de lumière (1) et une lentille (3), ladite source de lumière (1) étant située dans une position coïncidant avec le foyer de ladite lentille (3), et la lumière émise par ladite source (1) traversant ladite lentille (3) pour irradier un objet, ladite source de lumière (1) comprenant une pluralité d'unités d'émission de lumière (2) agencées d'une manière telle que ladite source de lumière (1) peut émettre un faisceau étroit ou un faisceau large en activant une partie desdites unités d'émission de lumière (2) ou la totalité desdites unités d'émission de lumière (2), caractérisé en ce que ladite partie desdites unités d'émission de lumière (2) destinée à émettre un faisceau étroit comprend une unité d'émission de lumière unique (2) positionnée de manière centrale, les unités d'émission de lumière restantes (2) de ladite pluralité d'unités d'émission de lumière (2) étant disposées de façon symétrique autour de ladite unité d'émission de lumière centrale.

2. Appareil d'irradiation de lumière selon la revendication 1, dans lequel lesdites unités d'émission de lumière (2) sont agencées sensiblement perpendiculairement à l'axe optique dudit appareil d'irradiation de lumière.

3. Appareil d'irradiation de lumière selon la revendication 1 ou 2, dans lequel ladite source de lumière (1) comprend sept unités d'émission de lumière (2) .

4. Appareil d'irradiation de lumière selon l'une quelconque des revendications 1 à 3, dans lequel ladite source de lumière (1) est agencée de manière à ce que sa surface d'éclairage soit en face de ladite lentille (3).

5. Appareil d'irradiation de lumière selon la revendication 4, dans lequel ladite surface d'éclairage de ladite source de lumière (1) est agencée sensiblement parallèlement à ladite lentille (3).
